**Europäisches Patentamt**

**European Patent Office**

**Office européen des brevets**

(11) Veröffentlichungsnummer : **0 345 450 B1**

(12) **EUROPÄISCHE PATENTSCHRIFT**

(45) Veröffentlichungstag der Patentschrift :
**12.08.92 Patentblatt 92/33**

(21) Anmeldenummer : **89107330.6**

(22) Anmeldetag : **24.04.89**

(51) Int. Cl.$^5$ : **B65D 90/02**

(54) **Kunststoffbehälter für Flüssigkeiten oder Gase.**

(30) Priorität : **30.04.88 DE 3814699**
**14.04.89 DE 3912270**

(43) Veröffentlichungstag der Anmeldung :
**13.12.89 Patentblatt 89/50**

(45) Bekanntmachung des Hinweises auf die
Patenterteilung :
**12.08.92 Patentblatt 92/33**

(84) Benannte Vertragsstaaten :
**AT BE CH ES FR GB IT LI LU NL SE**

(56) Entgegenhaltungen :
**US-A- 3 335 903**
**US-A- 3 735 895**

(73) Patentinhaber : **Knappe, Holger**
**Ringstrasse**
**W-2061 Grabau (DE)**

(72) Erfinder : **Knappe, Holger**
**Ringstrasse**
**W-2061 Grabau (DE)**

(74) Vertreter : **Siewers, Gescha, Dr.**
**Rechtsanwälte Dr. Harmsen, Dr. Utescher**
**Dipl.-Chem. Harmsen, Bartholatus Dr.**
**Schaeffer, Dr. Fricke, Wolter Patentanwalt**
**Dr.Siewers Adenauerallee 28**
**W-2000 Hamburg 1 (DE)**

EP 0 345 450 B1

**Beschreibung**

Die Erfindung betrifft Kunststoffbehälter für Flüssigkeiten oder Gase.

Verbundkunststoffe, also Schichtkörper aus verschiedenen Kunststoffen sind bereits bekannt und haben sich auf vielen Gebieten als Ersatz für die bisher üblichen Werkstoffe eingeführt. Allerdings ist es bislang noch nicht möglich, derartige Verbundkunststoffe oder Sandwich-Werkstoffe für alle Anwendungsbereiche zu benutzen, weil entweder ihre mechanischen Eigenschaften oder andere Besonderheiten die Verwendung anstelle von Metall- oder Keramikwerkstoffen nicht ermöglichten. Zu diesen Einsatzbereichen zählen zum Beispiel die Herstellung von Wasserspeichern, insbesondere der sogenannten Therme oder Speicher für andere wässrige Flüssigkeiten, die heute zu einem großen Teil immer noch aus emailliertem Stahl bestehen. Emaillierte Stahlspeicher sind aber ausgesprochen korrosionsanfällig, da sich Haarrisse in der Emailleschicht bilden und die Geräte bei Temperaturen um etwa 60 ° C oder darüber dann relativ schnell einer beträchtlichen Korrosion unterliegen. Erfahrungsgemäß halten derartige Wasserspeicher aus Stahl nur für eine Betriebszeit von etwa 2 - 3 Jahren und müssen dann wegen Korrosionsschäden ersetzt werden. Es ist aber bereits beispielsweise aus der DE-OS 33 42 386 bekannt, daß man anstelle von Stahlspeichern auch solche aus Kunststoff einsetzen kann, wobei diese Speicher aus einer Innenschicht, einem sogenannten Liner, aus modifiziertem Polyphenylenoxid, im folgenden PPO gennannt, aus glasfaserverstärktem Poyesterharz bestehen. Die glasfaserverstärkten Poyesterharze enthalten etwa einen Glasfaseranteil von 25 - 30 und in Sonderfällen 60 - 80 %. Praktische Versuche haben ergeben, daß derartige Speicherbehälter eine wesentlich höhere Lebensdauer als Metallspeicher aufweisen und zum Teil ohne Korrosionserscheinungen bis zu 10 Jahre verwendet werden können. Dies ist umso überraschender, als an und für sich bekannt ist, daß Polyphenylenoxid, abgekürzt PPO, zwar nur ein sehr geringes Wasseraufnahmevermögen hat, andererseits aber bei höheren Temperaturen ein oxidativer Abbau feststellbar ist. Trotz der in den Speichern üblichen erhöhten Temperatur hat sich aber gezeigt, daß PPO in der modifizierten Form als Innenauskleidung eine hervorragende Beständigkeit gegen Oxidation und Hydrolyse aufweist.

Bei Dauerversuchen mit den oben beschriebenen Kunststoffbehältern als Speicher hat sich allerdings herausgestellt, daß überraschenderweise nach längerem Gebrauch eine Versprödung der Innenauskleidung aus PPO feststellbar war, die bei Belastung des Behälters durch Erschütterung oder Vibration, wie sie beispielsweise bereits durch den Verkehr auf belebten Straßen auftreten kann, zu Haarrissen und damit zum Durchlässigwerden des Speichers führen kann. Durch umfangreiche Untersuchungen konnte erst festgestellt werden, daß die Ursache hierfür in dem Styrolgehalt liegt, den die im Handel erhältlichen landläufigen Polyesterreaktionsharze in der Regel aufweisen. Das nicht polymerisierte Styrol in der äußeren Laminatschicht greift den Liner aus PPO an und führt dadurch zu einer Beeinträchtigung-seiner mechanischen Eigenschaften.

Der Erfindung liegt daher die Aufgabe zugrunde, Kunststoffbehälter der geschilderten Art zu entwickeln, die die bekanntgewordenen Nachteile nicht aufweisen.

Zur Lösung der Aufgabe werden Kunststoffbehälter für Flüssigkeiten oder Gase mit einer Innenschicht aus modifiziertem PPO oder Polypropylen (PP) und einer glasfaserverstärkten Außenschicht vorgeschlagen, die dadurch gekennzeichnet sind, daß auf eine nahtlose Innenschicht eine auf annähernd geodätischen Linien verlegten Glasfaserschicht mit einer Ummantelung aus Thermoplasten oder Reaktionsharzen ohne einen Gehalt an monomeren Styrol erfolgt oder daß ausschließlich die äußersten von der Innenschicht beabstandeten Glasfaserschichten mit härtbaren Reaktionsharzen oder Thermoplasten versehen sind.

Überraschenderweise wurde festgestellt, daß die für Behälter der beschriebenen Art, insbesondere wenn es sich um Druckbehälter oder Großbehälter handelt, notwendige Zug- und Biegefestigkeit nicht in dem angenommenen Sinne von dem faserverstärkten Polyester abhängt, sondern sich bereits durch Glasfasern selbst erreichen läßt, wenn deren Wicklung so erfolgt, daß an jedem Punkt der Behälterwand die Zug- und Biegebeanspruchung so gering wie technisch möglich gehalten wird. Die als äußere Schicht aufgetragene Beschichtung aus härtbaren Reaktionsharzen oder Thermoplasten dient somit nicht der Stabilität des Behälters generell, sondern dient im wesentlichen nur dazu, die Glasfaserwicklung in der gegebener Position zu fixieren. Es ist daher auch nicht notwendig, daß das Reaktionsharz über besonders hohe Zug- und Biegefestigkeitswerte verfügt, da die auftretenden Drucke bereits vom Glasfasermantel aufgenommen werden und das Harz nur der äußeren Stabilisierung eben des Glasfasermantels dient.

Die Herstellung der erfindungsgemäßen Kunststoffbehälter erfolgt, indem der Liner aus modifiziertem PPO, das zum Beispiel unter dem Handelsnamen "Noryl" von der Firma General Electric im Handel ist, in an sich bekannter Weise durch Extrusionsblasen erzeugt wird. Der Liner wird dann nach Aufsetzen der Flansche, Anschlüsse usw., die nicht verklebt oder verschweißt werden müssen, als Kern im Wickelverfahren verwendet. Rotationssymmetrische Formkörper wie die hier in Frage stehenden Behälter, aber auch komplizierter gestaltete Formkörper werden in bekannter Weise mit Planetwickelmaschinen mit dreidimensionaler numerisch gesteuerter Fadenwicklung gewickelt. Wesentlich ist, daß die Glasfasern auf annähernd geodätischen Linien

2

verlegt werden, um in jedem Punkt des Behälters eine möglichst gleichmäßige Zug- und Biegefestigkeit zu erreichen. Geodätische Linien sind Linien verschwindender Krümmung auf einer Fläche im dreidimensionalen euklidischen Raum. Es sind Flächenkurven c(t) = [fo u] (t) einer Fläche f: U - R³ (U≦R², u(t) = (u¹ (t), u² (t)) die durch folgende Eigenschaften gekennzeichnet sind: C(t) ist eine Kurve verschwindender geodätischer Krümmung. U(t) genügt den Differentialgleichungen für geodätische Linien: Ü$^k$(t) + Σ u̇$^i$(t)u̇$^j$(t) Γ$_{ij}$$^k$ou(t) = 0, wobei u̇(t) = $\frac{d\, u(t)}{dt}$ und Γ$_{ij}$$^k$ die IJ Christoffelsymbole 2. Art der klassischen Flächentherorie sind.

Die Lage der geodätischen Linie richtet sich selbstverständlich nach der Form des jeweiligen Körpers und muß entsprechend berechnet und programmiert werden. Zur besseren Fixierung der Fasern kann über den Liner oder als Abschluß der Glasfaserschicht eine Kreuzwicklung angebracht werden. Die Stärke des so gewickelten Glasfasermantels richtet sich nach der zu erwartenden Druckbelastung; bei drucklosen Behältern Reicht in der Regel eine einlagige Glasfaserschicht, während bei Druckbehältern je nach den gesetzlichen Anforderungen mit einer Stärke der Glasfaserschicht gerechnet werden muß, die etwa das 2- bis 10 fache an Druck- und Biegefestigkeit aufweist als der zu erwartende Maximaldruck. Für Heißwasserspeicher wird in der Regel von einem Sicherheitsquotienten vom 5-fachen des Maximaldruckes ausgegangen.

Die abschließende Fixierung des Glasfasermantels ist auf zweierlei Art möglich, so können beispielsweise die Faserstränge im Wickelverfahren in einem Durchlaufbad mit Harz oder Thermoplast getränkt und anschließend unter Spannung auf den rotierenden Formkörper gewickelt werden. Dies ist beispielsweise immer dann möglich, wenn man Reaktionsharze verwendet, die in den sogenannten Prämixen kein Styrol enthalten. Wenn man die Fixierung mit ungesättigten Polyesterharzen vornehmen will, wird zuerst eine Lage Glasfaser ohne Harzzusatz gewickelt und erst bei der zweiten Lage erfolgt eine Tränkung der Faserstränge mit Harz. Auf diese Weise wird vermieden, daß das in den Prämixen vorhandene monomere Styrol in Kontakt mit dem Liner aus PPO oder PP kommen kann und zu Versprödungserscheinungen führt. Als Reaktionsharze können beispielsweise außer den ungesättigten Polyestern Epoxidharze, reaktive Polymethylmethacrylat (PMMA)-Harze oder Isozyanatharze eingesetzt werden. Die Verarbeitung erfolgt in an und für sich bekannter Weise unter Zusatz von Katalysatoren und Beschleunigern. Falls erwünscht, kann die äußere Faserlage auch mit zur Herstellung von Schaumstoff geeigneten Reaktionsharzen getränkt werden, so daß anschließend eine Aufschäumung dieser Harze durch Bestrahlung oder Temperaturerhöhung erfolgen kann. Die äußere Schicht des Fasermantels, die der Fixierung der Fasern dient, kann beispielsweise aus Schaum aus modifiziertem PPO bestehen, wenn aus bestimmten Gründen beispielsweise eine erhöhte Stabilität gegen thermische und hydrolytische Beanspruchung gewünscht wird. Die Fixierung ist aber auch mit Thermoplasten möglich, indem entweder die Fasern im Bad mit erwärmten Thermoplasten getränkt oder diese abschließend auf die Faserschicht aufgebracht werden.

Die erfindungsgemäßen Kunststoffbehälter können als Speicher für wässrige oder nicht-wässrige Flüssigkeiten oder für Gase, und zwar hier insbesondere für feuchte Gase eingesetzt werden, da sie insbesondere als Druckbehälter geeignet sind und bei entsprechender Auslegung des Glasfasermantels Drücken bis zu 100 bar standhalten können. Aufgrund der chemischen Inertheit und der thermischen und hydrolytischen Stabilität sind die Behälter vor allem bei solchen Verwendungszwecken einsetzbar, bei denen langfristig mit thermischer Belastung unter Druck durch wässrige Lösungen zu rechnen ist, also beispielsweise bei Wasserspeichern und hier insbesondere den sogenannten Thermen. Bisher durchgeführte Versuche haben deutlich gezeigt, daß durch den speziellen Aufbau des Verbundkunststoffes jede Versprödung des Liners vermieden wird und daß auf diese Weise Wasserspeicher hergestellt werden können, die einer Dauerbelastung im Test standhalten, der einer Normalbelastung in Haushalt oder Industrie von weit über 10 Jahren entspricht.

Im folgenden wird die Erfindung anhand der Zeichnungen näher erläutert:

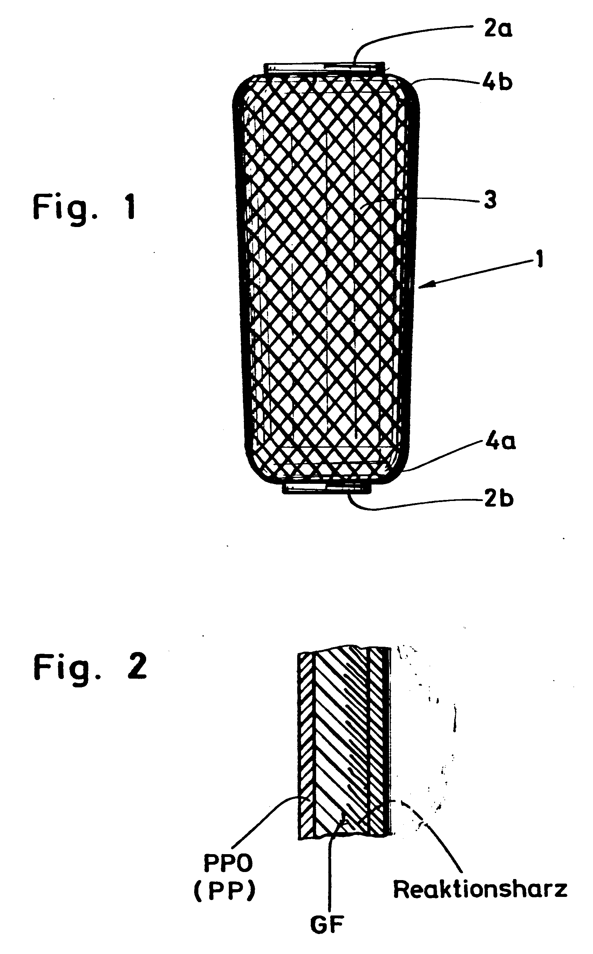

Abb. 1 zeigt einen erfindungsgemäßen Heizwasserspeicher in Draufsicht.

Abb. 2 zeigt schematisch einen Querschnitt durch die Speicherwand bei einer bevorzugten Ausführungsform.

Der Speicher 1 besteht aus dem nicht sichtbaren Liner sowie einer Glasfaserschicht 3, die oberflächlich mit einer Schicht aus Reaktionsharz versehen ist. Der Behälter ist an beiden Enden mit Flansch 2a, 2b ausgestattet, die nicht getrennt befestigt, sondern durch die Wicklung der Glasfaser mit dem Liner verbunden werden. Die Wicklung erfolgt in annähernd geodätischen Linien, die auch die Wülste 4a und 4b an den Schultern des Behälters verursachen. An diese Wicklung schließt sich eine Kreuzwicklung an, die an der Außenfläche zu erkennen ist.

In einer bevorzugten Ausführungsform besteht die Wandung des Behälters aus einer PPO- bzw. PP-Innenschicht, dem Liner, auf den eine Glasfaserschicht folgt, deren Abschluß nach außen wiederum eine Schicht aus Reaktionsharz bildet.

Beispiel:

Für eine Therme mit einer Behältergröße von 100 l wird ein entsprechender nahtloser Liner auf modifiziertem PPO mit einer Wandstärke von 2 mm durch Extrusionsblasen hergestellt. Vorzugsweise wird das Verfahren so durchgeführt, daß die geschlossene Form durch die Flanschringe durchextrudiert und anschließend außerhalb des Formteiles der Schlauch abgequetscht wird. Hierdurch können gleichzeitig Hinterschnitte produziert werden, die den Flanschstrang umfassen und beim Einbringen der O-Dichtung verhindern, daß der Liner aus dem Ring gedrückt werden kann. Daran anschließend wird in an sich bekannter Weise mit einer Planetwickelmaschine mit 3-dimensionalen numerisch gesteuerter Fadenwicklung eine einmalige Lage als Kreuzwicklung und die weiteren Lagen der Glasfaser auf annähernd geodätischen Linien aufgebracht. Ein Teil dieses Fasermantels ist als Pufferschicht vorgesehen und weist somit eine Stärke von etwa 0,4 mm auf. Beim weiteren Aufbringen der Glasfaser wird dann mit Reaktionsharz wie beispielsweise Polyesterharz getränkte Faser gefahren bis zu einer Schichtstärke von weiteren 0,6 mm, so daß der Fasermantel einschließlich äußerer Polyesterschicht ingesamt eine Stärke von etwa 1 mm aufweist.

Diese Therme ist für einen Druck bei Dauergebrauch von 10 bar und einem Prüfdruck von 30 bar ausgelegt. Die Untersuchungen ergaben, daß der Berstdruck etwa 124 bar beträgt.

Die beschriebenen Kunststoffbehälter werden größtenteils als Druckbehälter und hier insbesondere als Heißwasserthermen eingesetzt. Diese Behälter können aber auch als drucklose Behälter, und zwar insbesondere als sogenannte Ausdehnungsgefäße für Warmwasserheizungen benutzt werden.

Bei den zwischenzeitlich durchgeführten zahlreichen Versuchen zur Haltbarkeit der Kunststoffbehälter hat sich herausgestellt, und zwar insbesondere bei Verwendung als Druckbehälter für feuchte Gase, daß der Liner oder die Innenschicht in manchen Fällen vorzugsweise nicht aus PPO oder PP als Einschichtsystem bestehen solite, sondern daß man unter bestimmten Bedingungen auch vorzugsweise als Liner Mehrschichtsysteme mit einem Gehalt an PPO und anderen Thermoplasten einsetzen kann. Ohne Änderung des sonstigen Druck- und Belastungsverhaltens kann in Sonderfällen bei feuchten Gasen beispielsweise auch der PPO Liner durch einen Liner aus anderen Thermoplasten mit einer besseren Stabilität gegen aggressive feuchte Gase ausgetauscht werden; so kommen als Kunststoffe für die Innenschicht gegebenenfalls auch PTFE, also Polytetrafluorethylen, PCTFE, nämlich Polytrifluorchlorethylen, PSU, nämlich Polysulfone oder PI, Polyimide in Betracht. Vorzugsweise werden diese Kunststoffe allerdings dann auch als Mehrschichtsysteme mit PPO eingesetzt. Wichtig ist allerdings auch in diesem Zusammenhang die Tatsache, daß die Innenschicht, also der sogenannte Liner, nahtlos ist, d.h. also weder Schweiß- noch Quetschnähte aufweist, an denen ein Angriff aggressiver Flüssigkeiten erfolgen kann.

Außerdem hat sich herausgestellt, daß es bei Druckbehältern, die stark wechselnden Drucken ausgesetzt sind, von Vorteil sein kann, wenn zwischen Liner und Glasfaserschicht aus Langfasern noch eine Art Pufferschicht aus einer Matrix aus Reaktionsharzen oder Thermoplasten ohne Gehalt an monomerem Styrol, aber mit einem Gehalt an Glasfasern im Bereich von etwa 20 - 40% in Form von Kurzfasern gelegt wird. Unter styrolfrei wird in diesem Zusammenhang ein Thermoplast oder ein Reaktionsharz verstanden, das nach dem Aushärten nur noch technisch nicht mehr ohne weiteres entfernbare Mengen an monomeren Styrol enthält. Als styrolfrei werden im technischen Sinne die Lebensmittelqualitäten entsprechenden Copolymerisate angesehen, die noch einen Gehalt an monomeren Styrol und anderen flüchtigen Verbindungen bis maximal 0,5 -0,6% aufweisen können.

Diese "Pufferschicht" fängt extreme Druckbelastungen ab, die beispielsweise bei Flanschen aus Metall dazu führen können, daß sich die Metallkanten bei stark wechselnden und zum Teil sehr hohen Drucken so in die Glasfaserschicht im Sinne des Wortes hineinschneiden können, daß ein Teil der Glasfasern dabei zerstört und somit insgesamt die Stabilität des Behälters reduziert werden kann. Die relativ weiche Pufferschicht aus Thermoplasten bzw. Reaktionsharzen und einem verhältnismäßig niedrigen Anteil an Kurzfasern fängt derartige Extrembelastungen ab.

Wenn die erfindungsgemäßen Behälter als drucklose Behälter eingesetzt werden, braucht eine solche Pufferschicht selbstverständlich nicht vorhanden zu sein. Es hat sich auch herausgestellt, daß bei drucklosen Behältern, die ja einer geringeren Belastung unterliegen, die Geodätie der Glasfaserschicht nicht so streng beachtet zu werden braucht wie bei Druckbehältern, so daß in diesen Fällen ein Wickeln der Glasfaserschicht in der Weise erfolgen kann, daß von der mathematisch korrekten Geodätie weiter als im Falle von Druckbehältern abgewichen werden kann. Das Anbringen einer Kreuzwicklung auf dem Liner oder als Abschluß der Ummantelung hat sich allerdings auch hier als vorteilhaft erwiesen.

**Patentansprüche**

1. Kunststoffbehälter für Flüssigkeiten oder Gas (1) mit einer Innenschicht aus modifiziertem Polyphenylenoxid (PPO) oder aus Polypropylen (PP) und einer glasfaserverstärkten Außenschicht (3), dadurch gekennzeichnet, daß auf die nahtlose Innenschicht eine auf annähernd geodätischen Linien verlegte Glasfaserschicht (3) mit einer Ummantelung aus Thermoplasten oder Reaktionsharzen ohne einen Gehalt an monomerem Styrol folgt.

2. Kunststoffbehälter für Flüssigkeiten oder Gase (1) mit einer Innenschicht aus modifiziertem PPO oder PP und einer glasfaserverstärkten Außenschicht (3), dadurch gekennzeichnet, daß die nahtlose Innenschicht mit Glasfaser umwickelt ist und ausschließlich die äußersten, von der Innenschicht beabstandeten Glasfaserschichten mit härtbaren Reaktionsharzen oder Thermoplasten versehen sind.

3. Kunststoffbehälter (1) nach Anspruch 1 oder 2, dadurch gekennzeichnet, daß als Reaktionsharze Polymethylmethacrylat (PMMA), ungesättigte Polyester (EP) oder Isozyanatharze (PUR) eingesetzt sind.

4. Kunststoffbehälter (1) nach einem der Ansprüche 1 bis 3, dadurch gekennzeichnet, daß als Reaktionsharze ungesättigte Polyester eingesetzt sind.

5. Kunststoffbehälter (1) nach Anspruch 1 oder 2, dadurch gekennzeichnet, daß die äußeren Schichten aus mit PP getränkten Glasfasern bestehen.

6. Kunststoffbehälter (1) nach Anspruch 1 oder 2, dadurch gekennzeichnet, daß auf der Innenschicht oder als Abschluß der Glasfaserschicht (3) eine Kreuzwicklung vorhanden ist.

7. Kunststoffbehälter (1) nach Anspruch 1 oder 2, dadurch gekennzeichnet, daß die Innenschicht aus modifiziertem PPO oder PP als Mehrschichtsystem mit anderen Thermoplasten oder aus anderen Thermoplasten besteht.

8. Kunststoffbehälter (1) nach Anspruch 7, dadurch gekennzeichnet, daß als Thermoplaste außer PPO und PP insbesondere Polytetrafluorethylen (PTFE), Polysulfone (PSU) oder Polyimide (PI) vorhanden ist.

9. Kunststoffbehälter (1) nach Anspruch 1 oder 2, dadurch gekennzeichnet, daß zwischen Innenschicht und Glasfaserschicht aus Langfasern (3) in Bereichen besonderer Beanspruchung eine Zwischenschicht aus Thermoplasten oder Reaktionsharzen ohne einen Gehalt an monomerem Styrol und etwa 20-40% Glasfasern in Form von Kurzfasern vorgesehen ist.

**Claims**

1. Plastic tank for the storage of liquids or gases (1) with an inner skin of modified Polyphenylenoxide (PPO) or Polypropylene (PP) and a glass fibre reinforced outer skin (3), characterised in that, next to the seamless inner skin, there is a glass fibre skin (3) placed on almost geodetic lines with a cover of thermoplasts or reaction resins without monomer styrol content.

2. Plastic tank for the storage of liquids or gases (1) with an inner skin of modified PPO or PP and a glass fibre reinforced outer skin (3), characterised in that the seamless inner skin has a glass fibre shell and only the exterior glass fibre skin, which is separated from the inner skin, is provided with setting reaction resins or thermoplasts.

3. Plastic tank (1) as in Claim 1 or 2, characterised by the use of Polymethylmethacrylate (PMMA), non-saturated polyester (EP) or isocyanate resins (PUR) as reaction resins.

4. Plastic tank (1) as in Claims 1 to 3, characterised by the use of non-saturated polyesters as reaction resins.

5. Plastic tank (1) as in Claim 1 or 2, characterised in that the exterior skin consists of PP saturated glass fibres.

6. Plastic tank (1) as in Claim 1 or 2, characterised by a cross winding on the inner skin or as termination of the glass fibre skin (3).

7. Plastic tank (1) as in Claim 1 or 2, characterised in that the inner skin consists either of modified PPO or PP as a multiple layer system with other thermoplasts, or of other thermoplasts.

8. Plastic tank (1) as in Claim 7, characterised by the use of, apart from PPO and PP, in particular Polytetrafluorethylen (PTFE), Polysulfone (PSU) or Polymide (PI) as thermoplasts.

9. Plastic tanks (1) as in Claim 1 or 2, characterised by an intended intermediate skin consisting of thermoplasts or reaction resins without Monomer Styrol content and approx. 20-40 % short-fibre glass fibres between the inner skin and long-fibre glass fibre skin (3) in areas of particular strain.

**Revendications**

1. Récipients en matière plastique pour liquides ou gaz (1) avec couche intérieure en oxyde de polyphénylène (PPO) modifié ou en polypropylène (PP) et couche extérieure (3) renforcée par fibre de verre, caractérisés par le fait que sur la couche intérieure sans soudure se trouve une couche en fibre de verre (3) posée sur des lignes approximativement géodésiques munie d'un revêtement en thermoplastiques ou en résines de réaction sans teneur en styroène monomère.

2. Récipients en matière plastique pour liquides ou gaz (1) avec couche intérieure en oxyde de polyphénylène (PPO) modifié ou en polypropylène (PP) et couche extérieure (3) renforcée par fibre de verre, caractérisés par le fait que la couche intérieure sans soudure est enveloppée de fibre de verre et seules les couches extérieures en fibre de verre éprouvées par la couche intérieure sont munies d'un revêtement en résines de réaction durcissables ou en thermoplastiques.

3. Récipients en matière plastique (1) répondant aux exigences 1 ou 2, caractérisés par le fait qu'en tant que résines de réaction, il est utilisé du polyméthacrylate de méthyle (PMMA), du polyester insaturé (EP) ou de la résine isocyanate (PUR).

4. Récipients en matière plastique (1) répondant à une des exigences 1 à 3, caractérisés par le fait qu'en tant que résines de réaction, il est utilisé du polyester insaturé.

5. Récipients en matière plastique (1) répondant aux exigences 1 ou 2, caractérisés par le fait que les couches extérieures sont en fibres de verre imprégnées de PP.

6. Récipients en matière plastique (1) répondant aux exigences 1 ou 2, caractérisés par le fait que sur la couche intérieure ou pour finition de la couche de fibre de verre (3) se trouve un bobinage croisé.

7. Récipients en matière plastique (1) répondant aux exigences 1 ou 2, caractérisés par le fait que la couche intérieure est en PPO modifié ou en PP formant un système multicouche avec d'autres thermoplastiques ou que cette couche intérieure est composée d'autres thermoplastiques.

8. Récipients en matière plastique (1) répondant à l'exigence 7, caractérisés par le fait qu'en tant que thermoplastiques autres que PPO ou PP, il est utilisé en particulier du polytétrafluoréthylène (PTFE), du polysulfone (PSU) ou du polyimide (PI).

9. Récipients en matière plastique (1) répondant aux exigences 1 ou 2, caractérisés par le fait qu'entre la couche intérieure et la couche en fibres de verre à fibres longues (3), il est prévu pour les zones fortement éprouvées une couche intermédiaire en thermoplastiques ou en résines de réaction sans teneur en styroène monomère et environ 20 à 40 % de fibres de verre à fibres courtes.

## Fig. 1

2a
4b
3
1
4a
2b

## Fig. 2

PPO
(PP)

GF

Reaktionsharz